Europäisches Patentamt

(19) European Patent Office

Office européen des brevets

(11) Publication number: **0 068 831**
**A2**

## EUROPEAN PATENT APPLICATION

(21) Application number: 82303308.9

(22) Date of filing: 24.06.82

(51) Int. Cl.³: **G 06 F 13/00**

(30) Priority: 26.06.81 US 277783

(43) Date of publication of application: 05.01.83
Bulletin 83/1

(84) Designated Contracting States: **DE FR GB IT SE**

(71) Applicant: Honeywell Information Systems Inc.,
200 Smith Street, Waltham Massachusetts 02154 (US)

(72) Inventor: Kaplan, Jay, 15 Graybirch Lane, Wayland
Massachusetts (US)
Inventor: Harris, Richard G., 492 Lincoln Street, Franklin
Massachusetts (US)
Inventor: Sidebottom, Barry, 30 Paguin Street, Marlboro
Massachusetts (US)

(74) Representative: Harman, Michael Godfrey et al,
Honeywell Control Systems Ltd. Patent Department
Charles Square, Bracknell Berks RG12 1EB (GB)

(54) Address setting for computer terminal unit.

(57) A computer terminal unit has internal switch means SW1–SW4 setting the address of the unit, and SW5 setting the baud rate of the unit. In factory usage, it may be necessary to replace the unit by another when faulty. The replacement unit must be given the same address and baud rate, but neither unit should have its interior exposed to the factory environment. The unit has an enclosure 410, external to its main body 501. By jumpering the pins +5V and SWCOM in a connector 420 in the enclosure 410, the internal switch means are disabled. Jumpering a pin GND to selected ones of pins RAB1–RAB4 in the connector 420 then sets a fresh address for the unit, and jumpering the pin GND to a pin RB in the connector 420 sets a fresh baud rate for the unit.

- 1 -

ADDRESS SETTING FOR COMPUTER TERMINAL UNIT

This invention relates to computer terminal apparatus, and more particularly to factory data collection terminals.

Factory data collection terminals are generally installed in factory areas for personnel to use to enter information pertaining to the operation of the factory. For example, they may be placed in unattended areas in the factory for production workers to use in recording the starting or stopping of a job. .They can be utilized for inventory control, or provide the database for payroll calculations. Generally the areas in which such factory data collection terminals are located are quite dirty as compared to office areas, banking operations, and other similar type of commercial operations. Accordingly such data collection terminals are enclosed in dustproof packages. Many such units may be placed at various locations in the factory. They are all interconnected, generally into a main computer system which is remotely located. Each unit can provide information for storage or processing by the computer system. In order to identify the source of information, each unit has an address by which it is identified. Each unit also has its own baud rate for transmitting information to the central processing system or receiving information from it, and the baud rate of one unit may be different from that of another.

A problem arises when maintenance is required of any of these data collection units. By removing the enclosure in order to diagnose and correct a problem, the internal mechanism is exposed to contaminants and untrained maintenance personnel which can cause other more severe problems. Accordingly, it is desirable to remove the entire unit without exposing any of the internal mechanism and replace it with another operable unit. The inoperable unit would then be sen to a central maintenance depot, repaired and returned.

With known units, it is not possible to remove the entire unit without in some manner exposing the internal mechanism to the factory contaminants.  This is primarily because of the need to access the interior of the replacement unit to set the address and baud rate to match the unit being removed.

Accordingly the present invention provides a computer terminal unit having internal switch means settable to define the address of the terminal, characterized by disabling circuitry operable to disable the internal switch means, and an enclosure, external to the main body of the unit containing the switch means and disabling circuitry, comprising a connector including a first pair of terminals, coupled to the disabling circuitry, which can be jumpered together to operate the disabling circuitry, and a second set of terminals, coupled to the switch means, one of which can be jumpered to selected ones of the rest to set a fresh address for the unit.

By this means, it is possible to construct the unit with the enclosure housing all the various connecting circuits which can be removably attached to the terminal unit, and which can be opened to the factory atmosphere to permit the removal of the terminal unit.  After removal of the faulty terminal unit, it can be replaced with an operable one until the original terminal unit is repaired at a centrally located maintenance depot and returned, again without exposing the internal operating mechanisms of the terminal unit.  By appropriately jumpering the terminals in the enclosure, the same identification address can be retained for the fresh terminal unit.  Since each terminal unit has its own identification address, this is achieved by disabling the address of the replacement unit and resetting the address of the disabled terminal unit, so that any other unit in the system addressing the new terminal unit utilizing the old address will be able to communicate with the new terminal unit as if it were the older terminal unit.

Preferably means are also provided for setting the baud rate of the new terminal unit to match that of the old.

A terminal unit in accordance with the invention will now be described, by way of example, with reference to the drawings, in which:-

Figure 1 shows a known factory data collection terminal.

Figure 2 is a front elevation view of the present terminal.

Figure 3 is a side elevation view of the present terminal.

Figure 4 is an exploded view of the enclosure unit of the present terminal.

Figure 5 is a schematic diagram of part of the wiring located within the present terminal.

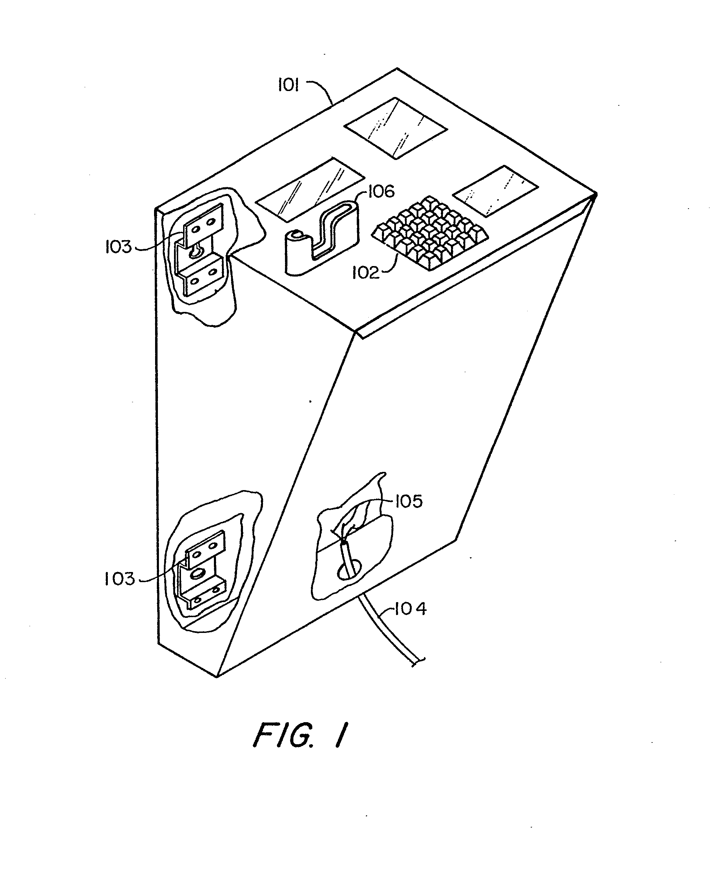

Figure 1 shows a known factory data collection terminal. An integral enclosure 101 houses the electronic circuits and other mechanisms for the factory data collection terminal. The data collection terminal is designed to be mounted on a wall or post via mounting brackets 103. Power, data signals and address signals are provided via wires 105 which are housed in a conduit 104 directly connected to the enclosure of the terminal. It should be noted that in order to mount the unit on the wall it is necessary to remove the enclosure, thus exposing the internal wiring mechanisms to any contaminants that may be present in the atmosphere and untrained personnel.

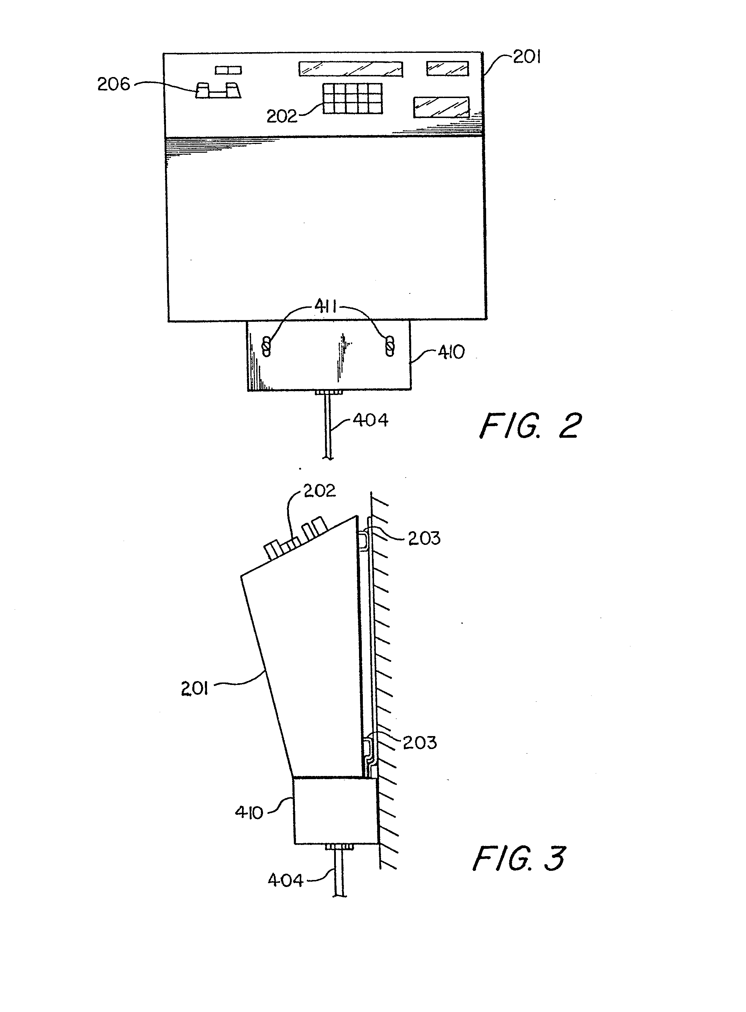

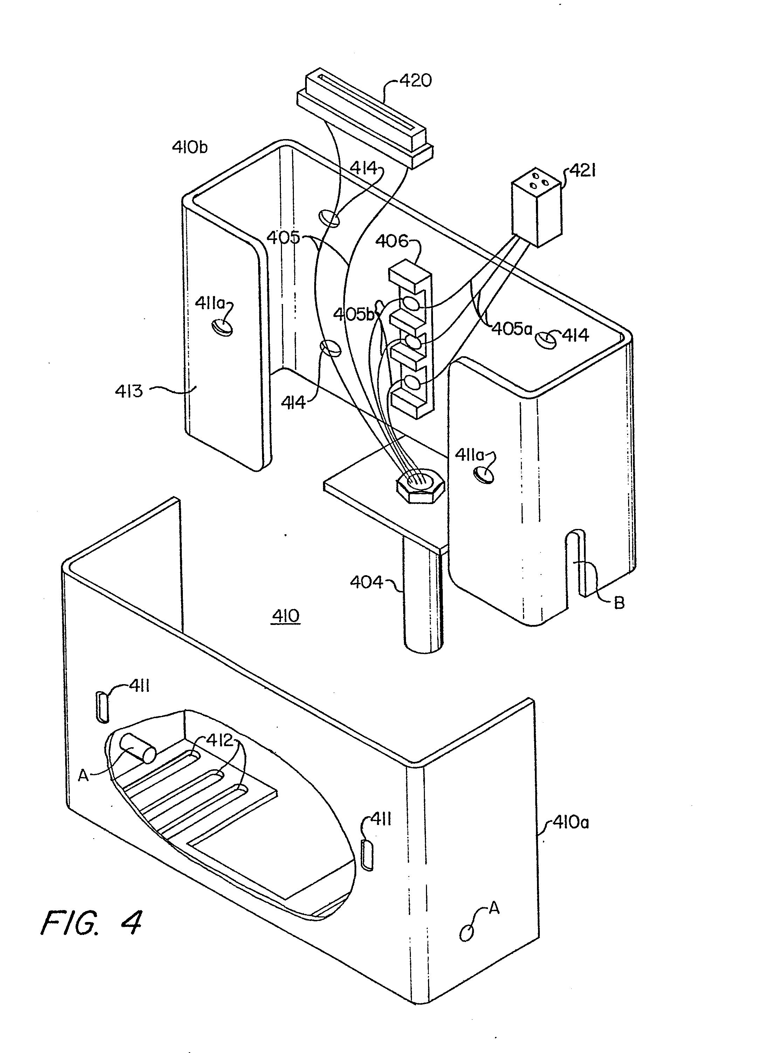

Figures 2, 3, and 4 show the present unit, which has a special electrical enclosure unit 410 removably attached below the factory data collection terminal 201. Power is provided to the data collection terminal via wires 405a and 405b, utilizing terminal board 406 and power plug 421. Data signals and address signals are fed to the data collection terminal via wires 405 and electric plug 420. These wires are housed in a conduit 404, which is removably connected to the electrical enclosure unit 410. To prevent interference between signals, the wires are shielded by standard shielding means. The power plug 421 and the data and address signal plug 420 are removably connected to the data collection terminal unit 201. Enclosure 210 has a removable face plate 410a with air vents 412 for ventilation. The back plate 410b of enclosure unit 410 has mounting holes 414 so that the back plate unit can be permanently mounted to a wall or post. The front plate unit is attached to the back plate unit via slotted holes 411 and 411a, pins A and slots B. This allows the front plate to have vertical adjustment yet prevents unauthorized access to wiring by sliding it up to touch the bottom of the terminal. Thus all the internal connecting mechanisms and circuits can be opened for connecting or disconnecting the data collection terminal via the connecting circuitry. However, in connecting or disconnecting the terminal through the electrical connecting unit, it is not necessary to open and expose any of the interior mechanisms of the terminal. The data collection terminal can be mounted or dismounted via the mounting brackets 203 external to the data collection unit.

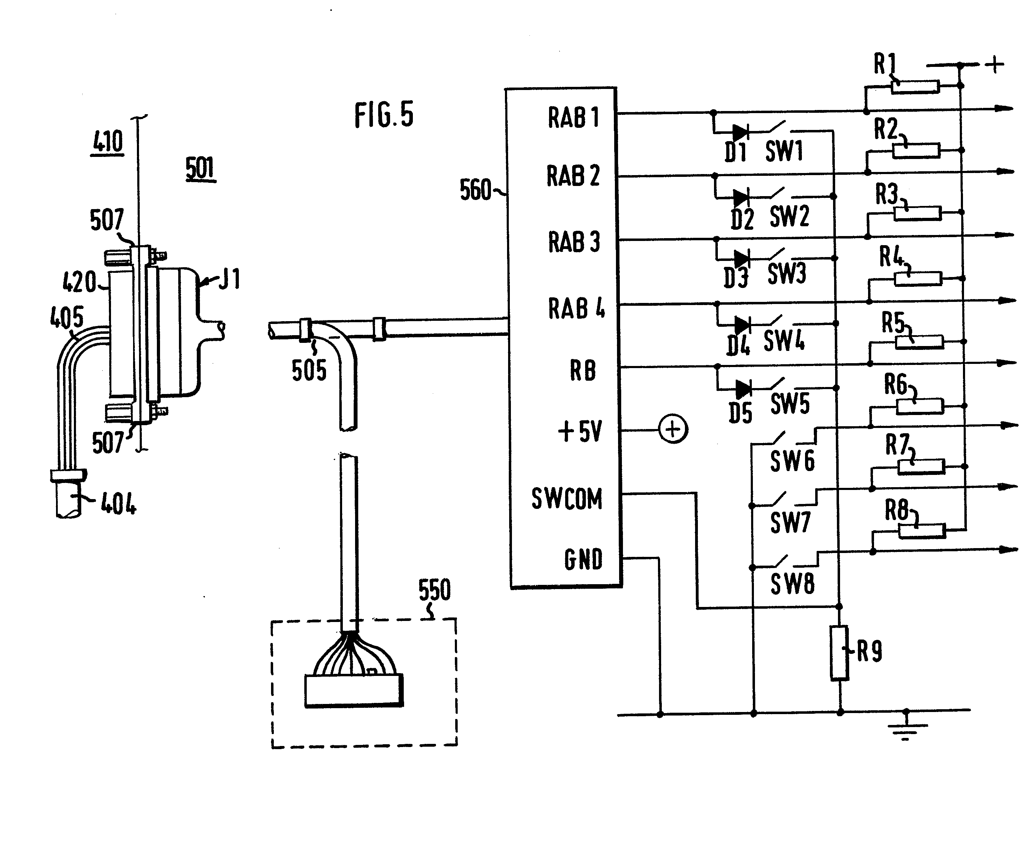

Figure 5 shows a connector J1, mounted on the inside of the data collection terminal 201, into which the plug 402 can be plugged. An internal cable 505 from J1 leads to a pin assembly 550 and to a connector terminal assembly 560. The plug connector 420 is attached to the terminal 201 by bolts 507.

The connector 550 carries various lines concerned with control functions, etc., as follows:

FG   frame ground
TD   transmitted data
RD   received data
RTS  request to send
CTS  clear to send
SG   signal ground
DCD  data carrier detect
DTR  data terminal ready.

The connector assembly 560 carries various lines concerned with further control functions, etc., including addressing, as follows:

GND      ground, used for address and baud selection

SWCOM    switch disable

+5V      switch disable

RB       remote baud selection

RAB1 ⎫

RAB2 ⎪

RAB3 ⎬ remote address bits 1 - 4.

RAB4 ⎭

The connectors 420 and J1, of course, carry both sets of lines.

The pin assembly 560 feeds circuitry, also internal to the terminal 201, including a DIP (Dual In-Line Package) switch set, comprising eight switches SW1-SW8. Switches SW1-SW5 are connected to the pins RAB1-RAB4 and RB by respective diodes D1-D5, and to ground via a resistor R9, to which the pin SWCOM is also connected. Pull-up resistors R1-R5 are connected to the pins RAB1-RAB4 and RB, and three further pull-up resistors R6-R8 to the remaining 3 of the 8 output lines, these last 3 output lines being connected to ground through the last 3 switches SW6-SW8.

The address of any data collection terminal is set internally by the states of the switches. A closed switch can represent 1, and an open switch, 0. Thus if the terminal has address 7, this would be represented internally by setting switches SW1 to SW4 to 1110 - i.e. binary 7 reading from right to left.

If this unit is removed and replaced by another unit which has been set with different address, it is necessary that this replacement unit be given the same old address number 7. This can be accomplished externally by jumpering wires in connector 420. Using the same references for the pins in connector 420 as the corresponding pins in connector 560, this jumpering is accomplished by jumpering the GND pin to a combination of pins RAB1-RAB4 to set the required address. First, however, the address and baud rate DIP switches inside the replacement unit must be disabled. This is accomplished by jumpering the SWCOM pin to the +5V pin.

The baud rate can also be changed by jumpering pins, as follows. To obtain a 1200 baud rate, the GND pin is jumped to the RB pin. In order to obtain a 2400 baud rate, no jumper is necessary.

Thus both addresses and baud rate changes can be set externally to any unit attached to the enclosure 410.

CLAIMS

1.  A computer terminal unit (201) having internal switch means (SW1-SW4) settable to define the address of the terminal, <u>characterized by</u> disabling circuitry (R9) operable to disable the internal switch means, and an enclosure (410), external to the main body of the unit containing the switch means and disabling circuitry, comprising a connector (420, J1) including a first pair of terminals (+5V, SWCOM), coupled to the disabling circuitry, which can be jumpered together to operate the disabling circuitry, and a second set of terminals (RAB1-RAB4, GND), coupled to the switch means, one of which (GMD) can be jumpered to selected ones of the rest (RAB1-RAB4) to set a fresh address for the unit.

2.  A computer terminal unit according to Claim 1, wherein the internal switch means are also settable (SW5) to define the baud rate of the unit, characterized in that the disabling circuitry also disables the baud rate setting by the switch means when operated, and in that the connector includes a third pair of terminals (GND, RB), coupled to the switch means, which can be jumpered to set a fresh baud rate for the unit.

FIG. 1

FIG. 2

FIG. 3

FIG. 4

FIG.5